(19) Europäisches Patentamt / European Patent Office / Office européen des brevets

(11) EP 3 625 270 B1

(12) **EUROPEAN PATENT SPECIFICATION**

(45) Date of publication and mention of the grant of the patent:
**06.03.2024 Bulletin 2024/10**

(21) Application number: **18721418.4**

(22) Date of filing: **09.05.2018**

(51) International Patent Classification (IPC):
***C08F 4/02*** *(2006.01)* ***C08F 4/654*** *(2006.01)*
***C08F 110/06*** *(2006.01)*

(52) Cooperative Patent Classification (CPC):
(C-Sets available)
**C08F 110/06;** C08F 2410/06 (Cont.)

(86) International application number:
**PCT/EP2018/062056**

(87) International publication number:
**WO 2018/210665 (22.11.2018 Gazette 2018/47)**

(54) **CATALYST COMPONENTS FOR THE POLYMERIZATION OF OLEFINS**

KATALYSATORKOMPONENTEN ZUR OLEFINPOLYMERISIERUNG

COMPOSANTS DE CATALYSEUR DE POLYMÉRISATION D’OLÉFINES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.05.2017 EP 17171676**

(43) Date of publication of application:
**25.03.2020 Bulletin 2020/13**

(73) Proprietor: **Basell Poliolefine Italia S.r.l.**
**20121 Milano (IT)**

(72) Inventors:
- **BRITA, Diego**
  **44122 Ferrara (IT)**
- **GUIDOTTI, Simona**
  **44122 Ferrara (IT)**

(74) Representative: **Giberti, Stefano**
**c/o Basell Polioefine Italia s.r.l.**
**Intellectual property dept.**
**P.le Donegani 12**
**44122 Ferrara (IT)**

(56) References cited:
**EP-A1- 1 229 054**
**EP-A1- 1 666 505**
**US-A1- 2005 227 858**
**US-A1- 2006 046 927**

EP 3 625 270 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 110/06, C08F 4/025;**
**C08F 110/06, C08F 4/6545;**
C08F 110/06, C08F 2500/15

## Description

FIELD OF THE INVENTION

The present disclosure relates to catalyst components for the (co)polymerization of olefins having improved flowability, including catalysts obtained from the catalyst components and their use in processes for the (co)polymerization of olefins.

BACKGROUND OF THE INVENTION

Ziegler-Natta catalyst components may be used for the stereospecific polymerization of olefins, such as propylene. The first catalyst of this type that was widely used in the industry comprised solid $TiCl_3$ obtained by the reduction of $TiCl_4$ with aluminum alkyl compounds. However, the activity and stereospecificity of the catalysts were often not commercially viable and the resulting polymers had to be subjected to a de-ashing treatment to remove the catalyst residues, and to a washing step for removing any resulting atactic polymer. The catalysts presently used often comprise a solid catalyst component further comprising a magnesium dihalide and one or more of a supported titanium compound, an internal electron donor compound, and an Al-alkyl compound as a cocatalyst.

Depending on the type of polymerization technologies one may employ, the particle size of the catalyst may range from about 5 to about 200 $\mu$m. However, this size range may be subject to cohesiveness problems that worsen flowability and decrease the homogeneous distribution of the catalyst particles in the reactor.

In order to address these issues, slip agents such as stearates or erucamide have been employed. However, these additives have generally not improved the flowability features. U.S. Pat. App. Pub. No. 2015/0344667 suggests coating the catalyst or carrier particles with a layer of nanoparticles made of conductive material, such as carbon black. However, this process is burdensome because an additional, separate step for the preparation of a gel comprising the nanoparticles must be performed. Moreover, the presence of an additional layer may prevent the necessary interaction between the catalytically active metal(s) and the carriers. Additionally, the procedure, which comprises the use of a water-based nanoparticles gel, can inactivate the Ti based catalyst.

Other prior documents are: EP 1 666 505, EP 1 229 054, US 2005/0227858 and US 2006/0046927.

A simple way of improving catalyst flowability without compromising its catalytic performance is therefore desirable.

Accordingly, the applicants have surprisingly found that enhanced catalyst flowability may be obtained by mechanically mixing the catalyst component particles with low amounts of separated inorganic particles having specific compositions.

SUMMARY OF THE INVENTION

An object of the present disclosure relates to a catalyst mixture comprising a mechanical mixture of (a) particles of solid catalyst component comprising titanium (Ti), magnesium (Mg), and chloride (Cl), and (b) from 0.2 to 5.0% by weight of particles of a solid compound having an average particle size ranging from 0.1 $\mu$m to 1 mm and containing more than 50% by weight of $SiO_2$ units, said percentage of (b) being based on the total weight of catalyst mixture (a) + (b).

DETAILED DESCRIPTION OF THE INVENTION

The term mechanical mixture indicates that the particles of solid catalyst component (a) are distinct and separated from those of solid compound (b). Said particles of catalyst component (a) and particles of compound (b) being brought in close proximity to each other by means of mechanic mixing.

Preferably, in the catalyst mixture of the present disclosure the inorganic solid compound has particle size ranging from 2 to 800 $\mu$m, more preferably from 1 to 100 $\mu$m and especially ranging from 1 to 30 $\mu$m.

Preferably, the solid compound b) containing more than 50% by weight of $SiO_2$ units is selected from silica, silicates and diatomaceous earth. Among silicates, particularly preferred are phyllosilicates like talc. Preferred type of silica is the hydrophilic silica, i.e, silica that has not been modified to be made it hydrophobic. Among them, the use of crystalline silica in particular having size from 0.1 to 5 $\mu$m is preferred. By the term crystalline silica is meant a silica based material showing an X-ray spectra with sharp reflections similar to those of quartz or cristobalite.

Also, the use of diatomaceous earth is preferred. Among them particularly preferred is the use of diatomaceous earth commercialized under the name Celite®.

The particle size of the solid catalyst component preferably ranges from 4 to 120 $\mu$m more preferably from 8 to 100 $\mu$m and especially from 10 to 90 $\mu$m.

Preferably the amount of particles of solid compound (b) ranges from 0.5 to 5% more preferably from 0.75%

to 4% and especially from 1 to 3%wt based on the total weight of catalyst mixture (a)+(b).

The solid catalyst component may be of granular, spheroidal irregular or spherical regular morphology.

Granular or otherwise irregular catalyst particle may be obtained by reacting Ti-halides with precursors of general formula $MgX_n(OR)_{2-n}$ in which X is Cl or a $C_1$-$C_{10}$ hydrocarbon group, R is a $C_1$-$C_8$ alkyl group and n ranges from 0 to 2. Such a reaction generates solid particles basically composed of $MgCl_2$ on which Ti compound are fixed.

Catalyst components with a spherical morphology may be obtained by reacting Ti-halides with precursors comprising adducts of formula $MgCl_2(R^1OH)_n$ where R is a $C_1$-$C_8$ alkyl group, preferably ethyl, and n is from 2 to 6.

The preferred solid catalyst components according to the present disclosure are those having a prevailing spherical shape. In particular, prefererred are those characterized by a sphericity factor higher than 0.60 and preferably higher than 0.70. The sphericity factor being calculated using the image analysis technique described in the characterization section of the present application.

According to a specific embodiment, the solid catalyst component has a sphericity factor higher than 0.7 and a particle size ranging from 10 to 90 $\mu$m.

Preferably, the amount of Mg in the solid catalyst component ranges from 8 to 30% more preferably from 10 to 25%wt.

Preferably, the amount of Ti ranges from 0.1 to 8%, more preferably from 0.5 to 5% and even more preferably from 0.7 to 3%wt.

The titanium atoms preferably belong to titanium compounds of formula $Ti(OR^2)_nX_{4-n}$ in which n is comprised between 0 and 4; X is halogen and $R^2$ is an hydrocarbon radical, preferably alkyl, radical having 1-10 carbon atoms. Among them, particularly preferred are titanium compounds having at least one Ti-halogen bond such as titanium tetrahalides or halogenalcoholates. Preferred specific titanium compounds are $TiCl_4$, and $Ti(OEt)Cl_3$.

In a preferred aspect of the present disclosure the catalyst components further comprise an electron donor compound (internal donor). Preferably, it is selected from esters, ethers, amines, silanes, carbamates and ketones or mixtures thereof.

When an increased stereospecificity of the catalyst is desired, the internal donor is preferably selected from the group consisting of alkyl and aryl esters of optionally substituted aromatic mono or polycarboxylic acids such as for example esters of benzoic and phthalic acids, and esters of aliphatic acids selected from malonic, glutaric, maleic and succinic acids. Specific examples of such esters are n-butylphthalate, di-isobutylphthalate, di-n-octylphthalate, ethylbenzoate and p-ethoxy ethyl-benzoate. Also, the diesters disclosed in WO2010/078494 and US patent 7,388,061 can be used. Among this class, particularly preferred are the 2,4-pentanediol dibenzoate derivatives and 3-methyl-5-t-butyl catechol dibenzoates. In addition, the internal donor can be selected among diol derivatives chosen among dicarbamates, monoesters monocarbamates and monoesters monocarbonates. Moreover, can be advantageously used also the 1,3 diethers of the formula:

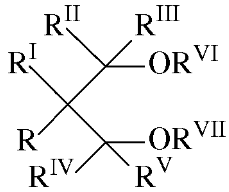

(I)

wherein R, $R^1$, $R^{II}$, $R^{III}$, $R^{IV}$ and $R^V$ equal or different to each other, are hydrogen or hydrocarbon radicals having from 1 to 18 carbon atoms, and $R^{VI}$ and $R^{VII}$, equal or different from each other, have the same meaning of R-$R^V$ except that they cannot be hydrogen; one or more of the R-$R^{VII}$ groups can be linked to form a cycle. The 1,3-diethers in which $R^{VI}$ and $R^{VII}$ are selected from $C_1$-$C_4$ alkyl radicals are particularly preferred.

It is also possible to use mixtures of the above mentioned donors. Specific mixtures are those constituted by esters of succinic acids and 1,3 diethers as disclosed in WO2011/061134.

When it is desired to increase the capability of the catalyst to distribute an olefin co-monomer within a polymer chain, such as in case of production of ethylene/$\alpha$-olefin copolymers, it is preferred to choose the electron donor among monofunctional donors, in particular ethers and esters. Preferred ethers are the $C_2$-$C_{20}$ aliphatic ethers and in particulars cyclic ethers preferably having 3-5 carbon atoms cyclic ethers such as tetrahydrofurane, dioxane. Preferred esters are $C_1$-$C_4$ alkyl esters of aliphatic mono carboxylic acids such as ethylacetate and methyl formiate. Tetrahydrofurane and ethylacetate are the most preferred.

In general, the final amount of electron donor compound in the solid catalyst component may range from 0.5 to 40% by weight preferably in the range from 1 to 35% by weight.

The preparation of the solid catalyst component can be carried out according to several methods. One method comprises the reaction between magnesium alcoholates or chloroalcoholates (in particular chloroalcoholates prepared

according to U.S.Pat. 4,220,554) and an excess of $TiCl_4$ in the presence of the electron donor compounds at a temperature of about 80 to 120°C.

According to a preferred method, the solid catalyst component can be prepared by reacting a titanium compound of formula $Ti(OR^2)m-yXy$, where m is the valence of titanium and y is a number between 1 and m and $R^2$ has the same meaming as previously specified, preferably $TiCl_4$, with a magnesium chloride deriving from an adduct of formula $MgCl_2$•$pR^3OH$, where p is a number between 0.1 and 6, preferably from 2 to 3.5, and $R^3$ is a hydrocarbon radical having 1-18 carbon atoms. The adduct can be suitably prepared in spherical form by mixing alcohol and magnesium chloride in the presence of an inert hydrocarbon immiscible with the adduct, operating under stirring conditions at the melting temperature of the adduct (100-130°C). Then, the emulsion is quickly quenched, thereby causing the solidification of the adduct in form of spherical particles. Examples of spherical adducts prepared according to this procedure are described in USP 4,399,054 and USP 4,469,648. The so obtained adduct can be directly reacted with Ti compound or it can be previously subjected to thermal controlled dealcoholation (at a temperature in a range of about 80-130°C) so as to obtain an adduct in which the number of moles of alcohol is lower than 3, preferably between 0.1 and 2.5. The reaction with the Ti compound can be carried out by suspending the adduct (dealcoholated or as such) in cold $TiCl_4$ (about 0°C); the mixture is heated up to 80-130°C and kept at this temperature for 0.5-2 hours. The treatment with $TiCl_4$ can be carried out one or more times. The electron donor compound is preferably added during the treatment with $TiCl_4$. The preparation of catalyst components in spherical form are described for example in European Patent Applications EP-A-395083, EP-A-553805, EP-A-553806, EPA601525 and WIPO Pat. App. Pub. No. WO98/44009.

The catalyst mixture comprising the particles made of solid catalyst component (a) and the particles (b) made of the $SiO_2$ unit based compound, can be prepared with several blending methods the preferred of which comprises dry blending the two solids in a suitable apparatus. Preferably the dry blending is carried out at room temperature for a time ranging from 0.2 to 20 hours, preferably from 0.5 to 15 hours and more preferably from 0.5 to 5 hours in a nitrogen environment.

It is also possible preparing the mixture by stirring a liquid hydrocarbon slurry of the particles (a) and (b) and afterwards removing the liquid phase followed by drying the particles.

As it can be seen from the examples, the so obtained catalyst mixtures show a reduced break energy with respect to the catalyst particles (a) as such. The improvement is particularly pronounced in combination with the use of catalyst having a sphericity factor higher than 0.60 and preferably higher than 0.70. These catalysts show flowability improvement also in the avalanche energy and in the funnel test thereby proving that the improvement can be seen in various stages of the catalyst handling. Also, the polymerization test carried out on the catalyst mixture confirms that the performances are at the same level as those of the solid catalyst component not containing the $SiO_2$ unit based compound.

The solid catalyst components according to the present disclosure are converted into catalysts for the polymerization of olefins by reacting them with organoaluminum compounds. In particular, an object of the present disclosure is a catalyst for the polymerization of olefins $CH_2=CHR$, in which R is a hydrocarbyl radical with 1-12 carbon atoms, optionally in mixture with ethylene, comprising the product obtained by contacting:

(i) the solid catalyst component as disclosed above and
(ii) an alkylaluminum compound and,
(iii) an external electron donor compound.

The alkyl-Al compound (ii) is preferably chosen among the trialkyl aluminum compounds such as for example triethylaluminum, triisobutylaluminum, tri-n-butylaluminum, tri-n-hexylaluminum, tri-n-octylaluminum. It is also possible to use alkylaluminum halides, alkylaluminum hydrides or alkylaluminum sesquichlorides, such as $AlEt_2Cl$ and $Al_2Et_3Cl_3$, possibly in mixture with the above cited trialkylaluminums.

The Al/Ti ratio is higher than 1 and is preferably comprised between 50 and 2000. Suitable external electron-donor compounds include silicon compounds, ethers, esters, amines, heterocyclic compounds and particularly 2,2,6,6-tetramethylpiperidine and ketones.

Another class of preferred external donor compounds is that of silicon compounds of formula $(R_6)_a(R_7)_bSi(OR_8)_c$, where a and b are integers from 0 to 2, c is an integer from 1 to 4 and the sum (a+b+c) is 4; $R_6$, $R_7$, and $R_8$, are alkyl, cycloalkyl or aryl radicals with 1-18 carbon atoms optionally containing heteroatoms. Particularly preferred are the silicon compounds in which a is 1, b is 1, c is 2, at least one of $R_6$ and $R_7$ is selected from branched alkyl, cycloalkyl or aryl groups with 3-10 carbon atoms optionally containing heteroatoms and $R_8$ is a $C_1$-$C_{10}$ alkyl group, in particular methyl. Examples of such preferred silicon compounds are methylcyclohexyldimethoxysilane (C donor), diphenyldimethoxysilane, methyl-t-butyldimethoxysilane, dicyclopentyldimethoxysilane (D donor), diisopropyldimethoxysilane, (2-ethylpiperidinyl)t-butyldimethoxysilane, (2-ethylpiperidinyl)thexyldimethoxysilane, (3,3,3-trifluoro-n-propyl)(2-ethylpiperidinyl)dimethoxysilane, methyl(3,3,3-trifluoro-n-propyl)dimethoxysilane. Moreover, the silicon compounds in which a is 0, c is 3, $R_7$ is a branched alkyl or cycloalkyl group, optionally containing heteroatoms, and $R_8$ is methyl are also preferred.

Examples of such preferred silicon compounds are cyclohexyltrimethoxysilane, t-butyltrimethoxysilane and thexyltrimethoxysilane.

The electron donor compound (iii) is used in such an amount to give a molar ratio between the organoaluminum compound and said electron donor compound (iii) of from 0.1 to 500, preferably from 1 to 300 and more preferably from 3 to 100. Therefore, it constitutes a further object of the present disclosure a process for the (co)polymerization of olefins $CH_2$=CHR, in which R is hydrogen or a hydrocarbyl radical with 1-12 carbon atoms, carried out in the presence of a catalyst comprising the product of the reaction between:

(i)the solid catalyst component of the present disclosure;
(ii) an alkylaluminum compound and,
(iii) optionally an electron-donor compound (external donor).

The polymerization process can be carried out according to various techniques, for example slurry polymerization using as diluent an inert hydrocarbon solvent, or bulk polymerization using the liquid monomer (for example propylene) as a reaction medium. Moreover, it is possible to carry out the polymerization process in gas-phase operating in one or more fluidized or mechanically agitated bed reactors.

The polymerization is may be carried out at temperature of from 20 to 120°C, preferably of from 40 to 80°C. When the polymerization is carried out in gas-phase the operating pressure is ranges from 0.5 and 5 MPa, preferably from 1 to 4 MPa. In the bulk polymerization the operating pressure is may range from 1 to 8 MPa, preferably from 1.5 to 5 MPa.

The following examples are given in order to better illustrate the invention without limiting it.

**EXAMPLES**

**Determination of X.I.**

2.5 g of polymer and 250 ml of o-xylene were placed in a round-bottomed flask provided with a cooler and a reflux condenser and kept under nitrogen. The obtained mixture was heated to 135°C and kept under stirring for about 60 minutes. The final solution was allowed to cool to 25°C under continuous stirring, and the insoluble polymer was then filtered. The filtrate was then evaporated in a nitrogen flow at 140°C to reach a constant weight. The content of said xylene-soluble fraction is expressed as a percentage of the original 2.5 grams and then, by difference, the X.I. %.

**Average Particle Size**

Determined by a method based on the principle of the optical diffraction of monochromatic laser light with the "Malvern Instruments 2000" apparatus. The average size is given as P50. P10 and P90 are also determined with this method.

The particle size distribution (SPAN) is calculated with the formula $\frac{P90 - P10}{P50}$ wherein P90 is the value of the diameter such that 90% of the total volume of particles have a diameter lower than that value; P10 is the value of the diameter such that 10% of the total volume of particles have a diameter lower than that value and P50 is the value of the diameter such that 50% of the total volume of particles have a diameter lower than that value.

The Malvern Mastersizer 2000 particle size analyzer is divided into three units:

1) an optical unit; Optical core unit for measurements of solids of sizes ranging from 0,02 to 2000$\mu$, equipped with two laser beam sources: red He/Ne laser, power 5mw, wave length 633 nm., blue (diode) laser, wave length 450nm.
2) a sampling Unit; Hidro 2000S automatic Sampling Unit for volumes between 50 and 120 ml, operating with internal capacity, centrifuge pump, stirrer and ultrasound probe with 40W power output.
3) a PC console; Portable LG Pentium series, using Malvern Professional software for Windows 2000 or NT. Method of data elaboration using Mie optics theory (Refractive Index for sample =1.596; Refractive Index for n-heptane =1.39).

Method description

For the measurements described herein n-heptane (plus 2 g/l antistatic Span 80) is used as dispersing agent.

The Measuring cell is loaded with dispersing agent, while pump/agitator speed is set up to 2205 RPM. Background measurement is then taken. Then sample is loaded, by using a dedicated loading mean for solids or slurries. A

that point, before being subject to PS Determination, the sample undergoes 30 seconds of ultrasound treatment. After that, the measurement is taken.

## Determination of Break Energy and Avalanche Energy

Measurements were carried out with a Revolution Powder Analyzer (Mercury Scientific Inc., Newtown, CT, USA). Specific measurement conditions are provided in the user manual revised on August 30, 2014.

## Determination of Sphericity Factor

The determination was carried out with the image analyzer commercial software Analysis Pro 3.2 which describes the sphericity of a particle using an algorithm applied to a source of image constituted by a SEM picture the dimension of which are selected based on the average size of the catalyst particle so as to include a statistically representative number of particles. For the catalyst sample having average particle size of 70μm the size of the picture was 2.5x2.5mm. For instance, for the catalyst sample having particle size of about 9 μm the size of the picture was 150 μm x150 μm.

# EXAMPLES

## Procedure for the preparation of the spherical adduct

An initial amount of micro spheroidal $MgCl_2 \cdot 2.8C_2H_5OH$ was prepared according to the method described in Example 2 of USP 4,399,054 but operating at 3,000 rpm instead of 10,000. The so resulting adduct had an average particle size of 70μm was then subject to thermal dealcoholation at increasing temperatures from 30 to 130°C in nitrogen current until the alcohol content is about 42%wt.

## Procedure for the preparation of the spherical solid catalyst component

Three lots of solid catalyst component were prepared according to the following procedure.Into a 500 ml round bottom flask, equipped with mechanical stirrer, cooler and thermometer 300 ml of $TiCl_4$ were introduced at room temperature under nitrogen atmosphere. After cooling to 0°C, while stirring, diisobutylphthalate and 9.0 g of the spherical adduct (prepared as described above) were sequentially added into the flask. The amount of charged internal donor was such to meet a Mg/donor molar ratio of 8. The temperature was raised to 100°C and maintained for 2 hours. Thereafter, stirring was stopped, the solid product was allowed to settle and the supernatant liquid was siphoned off at 100°C. After the supernatant was removed, additional fresh $TiCl_4$ was added to reach the initial liquid volume again. The mixture was then heated at 120°C and kept at this temperature for 1 hour. Stirring was stopped again, the solid was allowed to settle and the supernatant liquid was siphoned off. The solid was washed with anhydrous hexane six times in temperature gradient down to 60°C and one time at room temperature. The resulting solid was then dried under vacuum and characterized. Its sphericity factor resulted to be 0.77 for the lot A, 0.79 for Lot B, and 0.75 for Lot C.

The propylene polymerization test for catalyst Lot A produced PP with a catalyst activity of 23 kg/gcat and 97.1% of Xylene insolubility.

## Procedure for the polymerization of propylene

A 4 liter (L) steel autoclave equipped with a stirrer, pressure gauge, thermometer, catalyst feeding system, monomer feeding lines and thermostatic jacket, was used. The reactor was charged with 0.01 grams, of solid catalyst component 0,76 g of TEAL, 0.063 grams of cycloexylmethyldimethoxy silane, 3.21 of propylene, and 2.0 1 of hydrogen. The system was heated to 70°C over 10 min. under stirring, and maintained under these conditions for 120 min. At the end of the polymerization, the polymer was recovered by removing any unreacted monomers and was dried under vacuum.

The autoclave was closed and the desired amount of hydrogen was added (in particular, 2 NL in D donor tests, 1.5 NL in C donor tests and 1.25 NL in tests without external donor were used). Then, under stirring, 1.2 kg of liquid propylene was fed into the reaction. The temperature was raised to 70°C in about 10 minutes and the polymerization was carried out at this temperature for 2 hours. At the end of the polymerization, the non-reacted propylene was removed; the polymer was recovered and dried at 70°C under vacuum for 3 hours. The resulting polymer was weighed and characterized.

## EXAMPLES

### Examples 1-4 and Comparative Example 1

A series of four mixtures was prepared by dry mixing the lot A of the solid catalyst component prepared according to the general procedure with the specific amount reported in Table 1 of Celite® a diatomeaceous earth commercially available from Sigma-Aldrich having mean particle size of 22 μm. The blending was carried out as follows. 100 grams of the solid catalyst component were introduced in a 1L glass bottle and then, the amount of Celite® reported in table 1was also added.

The solids were mixed by tumbling the bottle for 1h at 60rpm.

The resulting mixtures were subject to energy break and avalanche energy determination and the results are reported in Table 1. A polymerization test for the mixtures of examples 1 and 2 was carried out. The propylene polymerization test for catalyst Example 1 produced PP with a catalyst activity of 25 kg/gcat and 96.9% of xylene insolubility while the test for example 2 produced PP with a catalyst activity of 23 kg/gcat and 96.9% of xylene insolubility. This demonstrates that the use of the $SiO_2$ based compound does not alter the catalyst performances.

### Examples 5-18 and Comparative Examples 2-5

The mixture were prepared as described in Examples 1-4 with the difference that Lot B was used instead of Lot A and $SiO_2$ based unit compounds reported in Table 1 were used instead of Celite®.

Silica S5631 having mean particle 0.9 μm (commercially available from Fluka).

Silica S342890 having mean particle 10 μm (commercially available from Sigma-Aldrich).

Silica S342831 having more than 90% of particles with size of greater than 800 μm was commercially available from Sigma-Aldrich.

Gasil AB 200DF is commercialized by PQ corporation. It is an amorphous silica with P50 size of 5 μm.

Gasil AB 735 is commercialized by PQ corporation. It is an amorphous silica with P50 size of 3 μm.

### Comparative Examples 7-9

The mixture were prepared as described in Examples 1-4 with the difference that Lot C was used instead of Lot A and the slip agents reported in Table 1 were used instead of Celite®.

### Examples 14-15 and Comparative example 10

The mixtures were prepared as described in Examples 1-4 with the difference that the solid catalyst component was of a granular type prepared as described in example 1 of U.S. Pat. No 7,759,445 (having a sphericity factor of 0.55) were tested for energy break and avalanche energy determination and the results are reported in Table 1.

**Table 1**

| Ex. | Catalyst | Additional compound | | | | | |
|---|---|---|---|---|---|---|---|
| | Lot/ Sphericity Factor | Type | Amount %wt. | Break Energy Kj/Kg. | % Impr. | Avalanche energy Kj/Kg. | % Impr. |
| C1 | A/0.77 | - | - | 69.3 | - | 24.5 | |
| 1 | " | Celite | 0.5 | 58.2 | 16 | 19 | 22 |
| 2 | " | " | 1 | 46.7 | 33 | 14 | 43 |
| 3 | " | " | 2 | 44.5 | 26 | 16.3 | 33 |
| 4 | " | " | 3 | 49.3 | 29 | 10.4 | 58 |
| C2 | B/0.79 | - | - | 49.6 | | 16.3 | |
| 5 | " | S5631 | 0.25 | 21.8 | 56 | 9 | 45 |
| 6 | " | | 0.75 | 28.8 | 42 | 7.5 | 54 |

(continued)

| Ex. | Catalyst | Additional compound | | | | | |
|---|---|---|---|---|---|---|---|
| | Lot/ Sphericity Factor | Type | Amount %wt. | Break Energy Kj/Kg. | % Impr. | Avalanche energy Kj/Kg. | % Impr. |
| 7 | " | | 1 | 28.7 | 42 | 7.3 | 55 |
| 8 | " | | 2 | 33.2 | 33 | 9.3 | 43 |
| 9 | " | | 3 | 36.2 | 27 | 9.8 | 40 |
| 10 | " | Silica 342890 | 1 | 26.7 | 46 | 6.6 | 60% |
| 11 | " | " | 2 | 39 | 21 | 8 | 51% |
| 12 | " | Silica 342831 | 2 | 42 | 15 | 15 | 8% |
| 13 | | Talc | 0.5 | 32.4 | 35% | 10.7 | 34% |
| 14 | | Gasil AB200df | 1 | 41 | 17% | 9.4 | 42% |
| 15 | | " | 2 | 43 | 13% | 9.8 | 40% |
| 16 | | Gasil AB735 | 1 | 44 | 11 | 8.8 | 46 |
| 17 | | | 2 | 38 | 23 | 10.6 | 35 |
| 18 | | | 3 | 34 | 31 | 10 | 39 |
| C3 | | Starch | 1 | 47 | 5% | 17.8 | -9% |
| C4 | | Erucamide | 1 | 52 | -5% | 17 | -4% |
| C5 | | " | 2 | 55 | -11% | 19 | -17% |
| C7 | C/0.75 | - | - | 45.5 | - | 14.7 | |
| | | Ca Stearate | 1 | 70.1 | -54% | 29.9 | -103% |
| | | " | 2 | 65 | -43% | 24.9 | -69% |
| C8 | | Mg Stearate | 1 | 57.7 | -27% | 22 | -50% |
| C9 | | " | 2 | 54.7 | -20% | 21 | -43% |
| | | | | | | | |
| C10 | 0.55 | - | | 88 | | 22 | |
| 14 | " | Celite | 1 | 78.1 | 11 | 19.0 | 13% |
| 15 | " | " | 2 | 73.5 | 16 | 20.0 | 9% |
| | | | | | | | |

**Claims**

**1.** A catalyst mixture comprising a mechanical mixture of (a) particles of solid catalyst component comprising titanium (Ti), magnesium (Mg), and chloride (Cl), and (b) from 0.2 to 5.0% by weight of particles of a solid compound having an average particle size, measured according to the method disclosed in the description, ranging from 0.1 $\mu$m to 1 mm and containing more than 50% by weight of $SiO_2$ units, said percentage of (b) being based on the total weight of catalyst mixture (a)+(b).

**2.** The catalyst mixture of claim 1 wherein the solid compound (b) containing more than 50% by weight of $SiO_2$ units is selected from silica, silicates and diatomaceous earth and mixtures thereof.

**3.** The catalyst mixture of claim 2 wherein the solid compound (b) containing more than 50% by weight of $SiO_2$ units

is selected from phyllosilicates.

4. The catalyst mixture of claim 3 wherein the phyllosilicate is talc.

5. The catalyst mixture of claim 1 wherein the solid compound (b) has particle size ranging from 2 to 800 μm.

6. The catalyst mixture of claim 1 wherein the solid compound (b) containing more than 50% by weight of $SiO_2$ units is selected from silica.

7. The catalyst mixture of claim 6 wherein the silica is crystalline silica.

8. The catalyst mixture of claim 7 wherein the silica has a particle size ranging from 0.1 to 5 μm.

9. The catalyst mixture of claim 1 wherein the particle size of the solid catalyst component (a) ranges from 4 to 120 μm.

10. The catalyst mixture of claim 9 wherein the solid catalyst component (a) has a sphericity factor higher than 0.60.

11. The catalyst mixture of claim 10 wherein the solid catalyst component (a) has a sphericity factor higher than 0.7 and a particle size ranging from 10 to 90 μm.

12. The catalyst mixture according to any of the preceding claims in which the amount of particles of solid compound (b) ranges from 0.5 to 5%wt.

13. The catalyst mixture of claim 1 in which the solid catalyst component (a) further comprises an electron donor selected from the group consisting of esters, ethers, amines, silanes, carbamates and ketones and mixtures thereof.

14. A catalyst system for the (co)polymerization of olefins $CH_2$=CHR, in which R is hydrogen or a hydrocarbyl radical with 1-12 carbon atoms, comprising the product obtained by contacting:

(i) the catalyst mixture according to claim 1;
(ii) an alkylaluminum compound and,
(iii)optionally an external electron donor compound.

15. A process for the (co)polymerization of olefins $CH_2$=CHR, in which R is hydrogen or a hydrocarbyl radical with 1-12 carbon atoms, carried out in the presence of the catalyst system according to claim 14.

## Patentansprüche

1. Katalysatormischung, umfassend eine mechanische Mischung aus (a) Partikeln von fester Katalysatorkomponente, umfassend Titan (Ti), Magnesium (Mg) und Chlorid (Cl), und (b) 0,2 bis 5,0 Gew.% Partikeln von fester Verbindung mit einer durchschnittlichen Partikelgröße, gemessen gemäß dem in den technischen Angaben offenbarten Verfahren, im Bereich von 0,1 μm bis 1 mm, und die mehr als 50 Gew.% $SiO_2$-Einheiten enthält, wobei der Prozentsatz von (b) sich auf das Gesamtgewicht der Katalysatormischung (a)+(b) bezieht.

2. Katalysatormischung nach Anspruch 1, wobei die feste Verbindung (b), die mehr als 50 Gew.% $SiO_2$-Einheiten enthält, ausgewählt ist aus Silika, Silikaten und Kieselerde sowie Mischungen davon.

3. Katalysatormischung nach Anspruch 2, wobei die feste Verbindung (b), die mehr als 50 Gew.% $SiO_2$-Einheiten enthält, ausgewählt ist aus Phyllosilikaten.

4. Katalysatormischung nach Anspruch 3, wobei das Phyllosilikat Talkum ist.

5. Katalysatormischung nach Anspruch 1, wobei die feste Verbindung (b) eine Partikelgröße im Bereich von 2 bis 800 μm hat.

6. Katalysatormischung nach Anspruch 1, wobei die feste Verbindung (b), die mehr als 50 Gew.% $SiO_2$-Einheiten enthält, ausgewählt ist aus Silika.

7. Katalysatormischung nach Anspruch 6, wobei das Silika kristallines Silika ist.

8. Katalysatormischung nach Anspruch 7, wobei das Silika eine Partikelgröße im Bereich von 0,1 bis 5 μm hat.

9. Katalysatormischung nach Anspruch 1, wobei die Partikelgröße der festen Katalysatorkomponente (a) im Bereich von 4 bis 120 μm liegt.

10. Katalysatormischung nach Anspruch 9, wobei die feste Katalysatorkomponente (a) einen Sphärizitätsfaktor höher als 0,60 hat.

11. Katalysatormischung nach Anspruch 10, wobei die feste Katalysatorkomponente (a) einen Sphärizitätsfaktor höher als 0,7 und eine Partikelgröße im Bereich von 10 bis 90 μm hat.

12. Katalysatormischung nach einem der vorhergehenden Ansprüche, wobei die Menge der Partikel der festen Komponente (b) im Bereich von 0,5 bis 5 Gew.% liegt.

13. Katalysatormischung nach Anspruch 1, wobei die feste Katalysatorkomponente (a) des Weiteren einen Elektronendonor ausgewählt aus der Gruppe bestehend aus Estern, Ethern, Aminen, Silanen, Carbamaten und Ketonen und Mischungen davon umfasst.

14. Katalysatorsystem zur (Co)polymerisation von Olefinen $CH_2$=CHR, wobei R Wasserstoff oder ein Kohlenwasserstoffrest mit 1 bis 12 Kohlenstoffatomen ist, umfassend das Produkt, das erhalten wird durch Kontaktieren von:

(i) der Katalysatormischung gemäß Anspruch 1;
(ii) einer Alkylaluminiumverbindung und
(iii)gegebenenfalls einer externen Elektronendonorverbindung.

15. Verfahren zur (Co)polymerisation von Olefinen $CH_2$=CHR, wobei R Wasserstoff oder ein Kohlenwasserstoffrest mit 1 bis 12 Kohlenstoffatomen ist, das in Gegenwart des Katalysatorsystems gemäß Anspruch 14 durchgeführt wird.

**Revendications**

1. Mélange catalytique comprenant un mélange mécanique de (a) des particules de constituant catalytique solide comprenant du titane (Ti), du magnésium (Mg) et du chlorure (Cl) et (b) 0,2 à 5,0 % en poids de particules d'un composé solide présentant une grosseur moyenne de particule, mesurée selon le procédé décrit dans la description, située dans la plage de 0,1 μm à 1 mm et contenant plus de 50 % en poids de motifs de $SiO_2$, ledit pourcentage de (b) étant basé sur le poids total du mélange catalytique (a)+(b).

2. Mélange catalytique selon la revendication 1, le composé solide (b) contenant plus de 50 % en poids de motifs de $SiO_2$ étant choisi parmi la silice, les silicates et la terre de diatomées et leurs mélanges.

3. Mélange catalytique selon la revendication 2, le composé solide (b) contenant plus de 50 % en poids de motifs de $SiO_2$ étant choisi parmi les phyllosilicates.

4. Mélange catalytique selon la revendication 3, le phyllosilicate étant le talc.

5. Mélange catalytique selon la revendication 1, le composé solide (b) présentant une grosseur de particule située dans la plage de 2 à 800 μm.

6. Mélange catalytique selon la revendication 1, le composé solide (b) contenant plus de 50 % en poids de motifs de $SiO_2$ étant choisi parmi les silices.

7. Mélange catalytique selon la revendication 6, la silice étant de la silice cristalline.

8. Mélange catalytique selon la revendication 7, la silice présentant une grosseur de particule située dans la plage de 0,1 à 5 μm.

**9.** Mélange catalytique selon la revendication 1, la grosseur de particule du constituant catalytique solide (a) étant située dans la plage de 4 à 120 μm.

**10.** Mélange catalytique selon la revendication 9, le constituant catalytique solide (a) présentant un facteur de sphéricité supérieur à 0,60.

**11.** Mélange catalytique selon la revendication 10, le constituant catalytique solide (a) présentant un facteur de sphéricité supérieur à 0,7 et une grosseur de particule située dans la plage de 10 à 90 μm.

**12.** Mélange catalytique selon l'une quelconque des revendications précédentes, dans lequel la quantité de particules de composé solide (b) est située dans la plage de 0,5 à 5 % en poids.

**13.** Mélange catalytique selon la revendication 1, dans lequel le constituant catalytique solide (a) comprend en outre un donneur d'électrons choisi dans le groupe constitué par les esters, les éthers, les amines, les silanes, les carbamates et les cétones et leurs mélanges.

**14.** Système catalytique destiné à la (co)polymérisation d'oléfines de formule $CH_2$=CHR, dans laquelle R représente hydrogène ou un radical hydrocarbyle comprenant 1 à 12 atomes de carbone, comprenant le produit obtenu par mise en contact de :

(i) le mélange catalytique selon la revendication 1 ;
(ii) un composé d'alkylaluminium et
(iii) éventuellement un composé donneur d'électrons externe.

**15.** Procédé destiné à la (co)polymérisation d'oléfines de formule $CH_2$=CHR, dans laquelle R représente hydrogène ou un radical hydrocarbyle comprenant 1 à 12 atomes de carbone, mis en oeuvre en présence du système catalytique selon la revendication 14.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20150344667
- EP 1666505 A
- EP 1229054 A
- US 20050227858 A
- US 20060046927 A
- WO 2010078494 A
- US 7388061 B
- WO 2011061134 A
- US 4220554 A
- US 4399054 A
- US 4469648 A
- EP 395083 A
- EP 553805 A
- EP 553806 A
- EP 601525 A
- WO 9844009 A
- US 7759445 B